# EUROPÄISCHE PATENTSCHRIFT

(11) **EP 1 311 555 B1**
(45) Veröffentlichungstag und Bekanntmachung des Hinweises auf die Patenterteilung: **30.03.2005**
(21) Anmeldenummer: 01971800.6
(22) Anmeldetag: 27.07.2001
(51) Int. Cl.: C08F 4/00

(54) **ACRYLATHAFTKLEBEMASSEN MIT ENGER MOLEKULARGEWICHTSVERTEILUNG**
ACRYLATE CONTACT ADHESIVE MATERIALS HAVING TIGHT MOLECULAR WEIGHT DISTRIBUTION
MATERIAUX ADHESIFS DE CONTACT ACRYLATE PRESENTANT UNE FAIBLE REPARTITION MOLECULAIRE

(30) Priorität: 28.07.2000 DE 10036801
(43) Veröffentlichungstag der Anmeldung: 21.05.2003
(73) Patentinhaber: tesa AG, 20253 Hamburg (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2001/008743
(87) Internationale Veröffentlichungsnummer: WO 2002/010226

(56) Entgegenhaltungen:
- WO-A-99/03894

## Beschreibung

Die Erfindung betrifft ein Initiatorsystem auf Basis von Nitroxiden zur radikalischen Polymerisation von (Meth-)acrylsäure und/oder deren Derivaten sowie ein Verfahren zur Herstellung von Acrytathaftklebemassen mit geringer Molekulargewichtsverteilung unter Einsatz dieses Initiatorsystems.

Für industrielle Haftklebeband-Anwendungen werden sehr häufig Polyacrylathaft-klebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukktebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.
Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vemetzt. Die Härtung verläuft thermisch oder durch UV-Vemetzung oder durch ES-Härtung (ES: Elektronenstrahlung). Der beschriebene Prozeß ist relativ kostenaufwendig und ökologisch bedenklich, da das Lösemittel in der Regel nicht recycelt wird und ein hoher Verbrauch an organischen Lösemitteln eine hohe Umweltbelastung bedeutet.
Weiterhin ist es sehr schwierig, Haftklebebänder mit hohem Masseauftrag blasenfrei herzustellen.
Eine Verbesserung dieser Nachteile bedeutet der Heißschmelz-Prozeß (Hotmelt-Prozeß). Hier wird der Haftkleber in der Schmelze auf das Trägermaterial aufgetragen.
Mit dieser neuen Technik sind aber auch Einschränkungen verbunden. Vor der Beschichtung wird der Haftklebemasse das Lösemittel in einem Trocknungsextruder entzogen. Der Trockungsprozeß ist mit einer relativ hohen Temperatur und Schereinwirkung verbunden, so daß besonders hochmolekulare Polyacrylathaftklebemassen stark geschädigt werden. Die Acrylathaftklebemasse vergelt oder der niedermolekulare Anteil wird durch Molekulargewichtsabbau stark angereichert. Beide Effekte sind unerwünscht, da sie für die Anwendung nachteilig sind. Die Klebemasse läßt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozeß stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.
Zur Herstellung von niedermolekularen Haftklebemassen sind verschiedene Polymerisationsmethoden geeignet. Stand der Technik ist der Einsatz von Reglern, wie z.B. von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitem die Molekulargewichtsverteilung.
Als eine weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111; EP 0 826 698; EP 0 B24 110; EP 0 841 346; EP 0 850 957] eingesetzt werden. Die unterschiedlichen Möglichkeiten der ATRP sind femer in den US 5,945,491, US 5,854,364 und US 5,789,487 beschrieben. Generell werden Metallkatalysatoren eingesetzt, die als Nebenwirkung die Alterung der Haftklebemassen negativ beeinflussen (Vergelung, Umesterung). Zudem sind die meisten Metallkatalysatoren giftig, verfärben die Klebemasse und lassen sich nur durch aufwendige Fällungen aus dem Polymer entfemen.
Eine weitere Variante ist der RAFT-Prozeß (Reversible Addition-Fragmentation Chain Transfer). Der Prozeß ist in den WO 98/01478 und WO 99/31144 ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen. In der US 4,581,429 wird ein kontrolliertes radikalisches Polymerisationsverfahren offenbart. Das Verfahren wendet als Initiator eine Verbindung der Formel R'R"N-O-X an, worin X eine freie radikalische Spezies darstellt, die ungesättigte Monomere polymerisieren kann. Die Reaktionen weisen aber im allgemeinen geringe Umsatzraten aus. Besonders problematisch ist die Polymerisation von Acrylaten, die nur zu sehr geringen Ausbeuten und Molekulargewichten abläuft.
In der WO 98/13392 werden offenkettige Alkoxyamin-Verbindungen beschrieben, die ein symmetrisches Substitutionsmuster aufweisen. Die EP 0 735 052 A1 offenbart ein Verfahren zur Herstellung thermoplastischer Polymere mit engen Polydispersitäten.
Die WO 96/24620 beschreibt ein Polymerisationsverfahren, bei dem sehr spezielle Radikalverbindungen, wie z.B. Phosphor-enthaltende Nitroxide, beschrieben werden.
Die WO 98/30601 offenbart spezielle Nitroxyle, die auf Imidazolidin basieren.
Die WO 98/4408 offenbart spezielle Nitroxyle, die auf Morpholinen, Piperazinonen und Piperazindionen basieren.
Die DE 199 49 352 A 1 offenbart heterocyclische Alkoxyamine als Regulatoren in kontrollierten radikalischen Polymerisationen.
Entsprechende Weiterentwicklungen der Alkoxyamine bzw. der korrespondierenden freien Nitroxide verbesserten die Effizienz zur Herstellung von Polyacrylaten. [Hawker, C.J. Vortrag, Hauptversammlung der American Chemical Society in San Francisco, Frühjahr 1997; Husemann, M., IUPAC World-Polymer Meeting 1998, Gold Coast, Australien, Vortrag über "Novel Approaches to Polymeric Brushes using 'Living' Free Radical Polymerizations" (Juli 1998)]
In den vorstehend erwähnten Patenten bzw. Vorträgen wurde versucht, die Steuerung von radikalischen Polymerisationsreaktionen zu verbessern. Dennoch besteht der Bedarf für ein Nitroxid-gesteuertes Polymerisationsverfahren, welches hoch reaktiv ist und mit dem sich hohe Umsätze bei gleichzeitig hohem Molekulargewicht und niedriger Polydispersität realisieren lassen. Dies gilt insbesondere für die Copolymerisation von Acrylathaftklebemassen, da hier hohe Molekulargewichte essentiell für Haftklebeanwendungen sind.
Aufgabe der Erfindung ist es daher, ein Initiatorsystem für ein entsprechendes Polymerisationsverfahren zur Verfügung zu stellen und ein Polymerisationsverfahren anzubieten, welches die Nachteile des genannten Standes der Technik nicht oder nur in vermindertem Umfang aufweist.

Überraschenderweise wurde gefunden, das asymmetrische Alkyoxyamine des Typs (II) in Verbindung mit deren freien Nitroxylvorstufen und einem thermisch langsam zerfallenden Azo- oder Peroxoinitiator die Polymerisation zur Herstellung von Acrytathaftklebemassen sehr wirksam und schnell bei höheren Temperaturen erlauben.

Anspruch 1 betrifft demnach ein Initiatorsystem für radikalische Polymerisationen, wobei eine Kombination von Verbindungen der allgemeinen Formeln 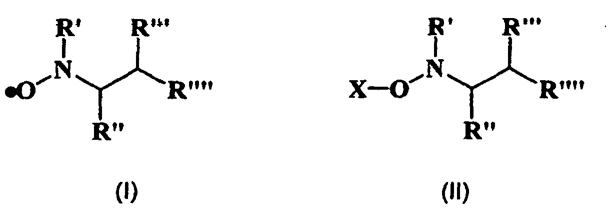 in Anwesenheit radikalisch zerfallender Initiatoren eingesetzt wird, worin
◆ R', R", R"', R"" unabhängig voneinander gewählt sind und
   a) verzweigte und unverzweigte C₁- bis C₁₈-Alkylreste; C₃- bis C₁₈-Alkenylreste; C₃- bis C₁₈-Alkinylreste;
   b) durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   c) C₂-C₁₈-Hetero-Alkylreste mit mindestens einem O-Atom und/oder einer NR-Gruppe in der Kohlenstoffkette; wobei R gewählt ist aus einer der Gruppen a), b) bzw. d) bis g),
   d) mit zumindest einer Estergruppe, Amingruppe, Carbonatgruppe und/oder Epoxidgruppe und/oder mit Schwefel und/oder mit Schwefel-Verbindungen, insbesondere Thioether oder Dithioverbindungen, substituierte C₁-C₁₈-Alkylreste, C₃-C₁₈-Alkenylreste, C₃-C₁₈-Alkinylreste;
   e) C₃-C₁₂-Cycloalkylreste
   f) C₈-C₁₀-Arylreste
   g) Wasserstoff
   darstellen;
◆ X eine Gruppe mit mindestens einem Kohlenstoffatom wiedergibt und derart ist, daß das von X abgeleitete freie Radikal X• eine Polymerisation von ethylenisch ungesättigten Monomeren starten kann.

Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₀-Arylreste dienen beispielsweise Phenyl, Naphthyl, Benzyl, oder weitere substituierte Phenylreste, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit

In einer besonders bevorzugten Ausführungsform der Erfindung wird eine Kombination aus den Verbindungen (Ia) und (IIa) als Initiatorsvstem eingesetzt.

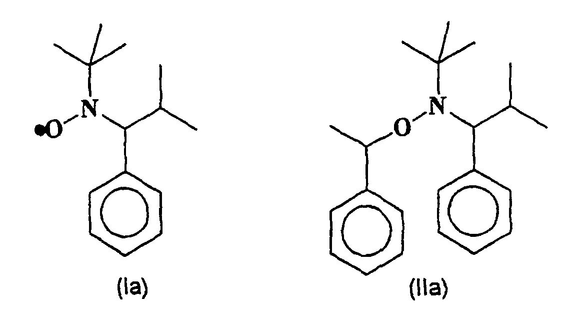

In einer sehr vorteilhaften Weiterentwicklung des erfinderischen Initiatorsystems werden als radikalisch zerfallende Initiatoren thermisch zerfallende radikalbildende Azo- oder Peroxo-Initiatoren eingesetzt. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Zusätzlich können weitere radikalisch zerfallende Initiatoren enthalten sein.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tbutylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die Verbindungen der Formel (II) liegt vorzugsweise in einer Menge von 0,0001 Mol-% bis 1 Mol-%, bevorzugter in einer Menge von 0,0008 bis 0,0002 Mol-% bezogen auf die Monomere vor. Die Verbindungen der Formel (I) liegt vorzugsweise in einer Menge von 1 Mol-% bis 10 Mol-%, bevorzugter in einer Menge von 3 bis 7 Mol-% bezogen auf Verbindung (II) vor. Der thermisch zerfallende Initiator aus c) liegt besonders bevorzugt in einer Menge von 1 bis 10 Mol-%, mehr bevorzugt in einer Menge von 3 bis 7 Mol.-% bezogen auf Verbindung der Formel (II) vor.

Zur Initiierung ist die Spaltung der X-O-Bindung der lnitiatorkomponente der Formel (II) essentiell. Vorzugsweise wird die Spaltung der Bindung durch Ultraschallbehandlung, Erhitzen oder Aussetzen elektromagnetischer Strahlung im Wellenlängenbereich der γ-Strahlung oder durch Mikrowellen bewirkt. Bevorzugter wird die Spaltung der C-O-Bindung durch Erwärmen bewirkt und findet bei einer Temperatur zwischen 70 und 160 °C statt.
Nachdem der Polymerisationsschritt beendet ist, kann das Reaktionsgemisch auf eine Temperatur unterhalb 60 °C, vorzugsweise auf Raumtemperatur, abgekühlt werden.

Gegenstand der Erfindung ist weiterhin ein Verfahren zur Herstellung von Acrylathaftklebemassen, bei welchem eine Monomermischung, welche zumindest zu 70 Gew.-% aus ethylenisch ungesättigten Verbindungen, insbesondere aus (Meth-)Acrylsäure und/oder deren Derivaten, besteht, unter Einsatz des beschriebenen erfinderischen Initiatorsystems radikalisch polymerisiert wird.

Bevorzugt wird als Monomergemisch ein solches bestehend aus zumindest 70 Gew.-% acrylischer Monomeren der allgemeinen Formel 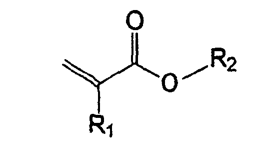 einsetzen, wobei R₁ = H oder CH₃ und R₂ = H oder eine Alkylkette mit 1 - 20 C-Atomen ist.

In einer vorteilhaften Ausführungsform des erfinderischen Verfahrens werden als Monomere zusätzlich Vinylverbindungen mit einem Anteil bis zu 30 Gew.-% eingesetzt, insbesondere eine oder mehrere Vinylverbindungen gewählt aus der folgenden Gruppe:
Vinylester, Vinylhalogenide, Vinylidenhalogenide, Nitrile ethylenisch ungesättigter Kohlenwassserstoffe.
Als Beispiele für derartige Vinylverbindungen seien hier genannt Vinylacetat, N-Vinylformamid, Vinylpyridine, Acrylamide, Acrylsäure, Hydroxyethylacrylat, Hydroxyethylmethacrylat, Ethylvinylether, Vinylchlorid, Vinylidenchlorid, Acrylonitril, Maleinsäureanhydrid, Styrol, ohne sich durch diese Aufzählung unnötig beschränken zu wollen. Weiterhin können alle weiteren Vinylverbindungen, welche unter die oben angeführte Gruppe fallen, eingesetzt werden, aber auch alle anderen Vinylverbindungen, die nicht in die oben genannten Verbindungsklassen fallen.

Zur Polymerisation werden die Monomere dermaßen gewählt, daß die resultierenden Polymere als industriell verwendbare Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 25 °C.

Die Polymerisation kann in Gegenwart eines oder mehrerer organischer Lösungsmittel und/oder in Gegenwart von Wasser durchgeführt werden. In einer vorteilhaften Ausführungsform des Verfahrens liegen zusätzliche Colösungsmittel oder Tenside, wie Glycole oder Ammoniumsalze von Fettsäuren, vor.
Bevorzugte Verfahren verwenden möglichst wenig Lösungsmittel Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethem, Glycolethem, Pyrrolidinen, N-Alkylpyrrolidinonen, N-Alkylpyrrolidonen, Polyethylenglycolen, Polypropylengiycolen, Amiden, Carbonsäuren und Salzen davon, Estern. Organosulfiden, Sulfoxiden, Sulfonen, Alkoholderivaten, Hydroxyetherderivaten, Aminoalkoholen, Ketonen und dergleichen, sowie Derivaten und Gemischen davon.
Die hergestellten Polymere weisen bevorzugt ein mittleres Molekulargewicht von 50.000 bis 400.000 g/mol, mehr bevorzugt zwischen 100.000 und 300.000 g/mol auf. Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).
Die nach diesem Verfahren hergestellten Acrylathaftklebemassen besitzen, je nach Reaktionsführung, eine Polydispersität von M_{w}/Mₙ < 3.5.

Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9-sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwickung werden zu der Haftklebemasse ein oder mehrere Weichmacher, wie z.B. niedermolekulare Polyacrylate, Phthalate, Walöweichmacher oder Weichharze hinzudosiert.

Die Acrylathotmelts können des weiteren mit einem oder mehreren Additiven wie Alterungsschutzmitteln, Lichtschutzmitteln, Ozonschutzmitteln, Fettsäuren, Harzen, Keimbildnem, Blähmitteln, Compoundierungsmitteln und/oder Beschleunigem abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfinderische Verfahren vorteilhaft, wenn das Polyacrylat bevorzugt aus der Schmelze auf einen Träger oder auf ein Trägermaterial als Schicht aufgebracht wird.

Hierfür werden die wie im vorhergehenden beschrieben hergestellten Polyacrylate zu einer Polyacrylatmasse aufkonzentriert, deren Lösungsmittelgehalt ≤ 2 Gew.-% ist. Dieser Prozeß findet bevorzugt in einem Aufkonzentrationsextruder statt. Die Polyacrylatmasse wird dann in einer günstigen Variante des Verfahrens als Heißschmelzmasse in Form einer Schicht auf einen Träger oder auf ein Trägermaterial aufgetragen.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vemetzem abgemischt. Die Vemetzung kann in günstiger Weise thermisch oder durch energiereiche Strahlung, im letzteren Fall insbesondere durch Elektronenstrahlung (ES) oder nach Zugabe geeigneter Photoinitiatoren durch ultraviolette Strahlung hervorgerufen werden.
Bevorzugte unter Strahlung vemetzende Substanzen gemäß dem erfinderischen Verfahren sind z.B. bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bioder multifunktionellen Verbindungen, die in der Lage sind, Polyacrylate zu vemetzen.
Als Photoinitiatoren eignen sich bevorzugt Norrish-Typ I- und -Typ II-Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.

Im weiteren wird die Verwendung des nach dem erfinderischen Verfahren hergestellten Polyacrylates als Haftklebemasse beansprucht.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragenen sein kann.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt.

### Scherfestigkeit (Test B)

Ein 13 mm breiter Streifen des Klebebandes wurde auf eine glatte Stahloberfläche, die dreimal mit Aceton und einmal mit isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei 80 °C wurde ein 1 kg-Gewicht an dem Klebeband befestigt, bei Raumtemperatur ein 1 kg- oder 2 kg-Gewicht. Die gemessenen Scherstandzeiten sind in Minuten angegeben und entsprechen dem Mittelwert aus drei Messungen.

### Gelpermeationschromatographie GPC (Test C)

Die Bestimmung des mittleren Molekulargewichtes M_{w} und der Polydisperistät PD erfolgte durch die Firma Polymer Standards Service in Mainz. Als Eluent wurde THF mit 0,1 Vol.-% Trifluoressigsäure eingesetzt. Die Messung erfolgte bei 25 °C. Als Vorsäule wurde PSS-SDV, 5 µ, 10⁻³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Bestimmung des Gelanteils (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Bestimmung des Umsatzes (Test E)

Die Bestimmung des Umsatzes erfolgte gravimetrisch und wird prozentual zu der Gewichtsmenge der eingesetzten Monomere angegeben. Zur Isolierung des Polymers wird in auf -78°C abgekühltem Methanol gefällt, abfiltriert und anschließend das Polymer im Vakuumschrank getrocknet. Das Gewicht des Polymers wird gewogen und geteilt durch die Einwaage der eingesetzten Monomere. Der berechnete Wert entspricht dem prozentualen Umsatz.

### Durchführung des Hotmeltprozeßes im Meßkneter:

Die Scherung und thermische Belastung der Acrylathotmelts wurde mit dem Meßkneter Rheomix 610p der Fa. Haake durchgeführt Als Antriebseinheit stand das Gerät Rheocord RC 300p zur Verfügung. Gesteuert wurde das Gerät mit der Software PolyLab System. Der Kneter wurde jeweils mit 52 g reiner Acrylathaftklebemasse (~80 % Füllgrad) befüllt. Die Versuche wurden bei einer Knettemperatur von 140 °C, einer Umdrehungszahl von 40 U/min und einer Knetzeit von 5 Stunden durchgeführt. Anschließend wurden die Muster, wenn möglich, wieder aufgelöst und das mittlere Molekulargewicht sowie die Polydispersität des Materials via GPC bestimmt.

### Herstellung des Nitroxids Ia (2,2,5-Trimethyl-4-phenyl-3-azahexan-3-nitroxid):

Es wurde analog der Versuchsvorschrift aus Journal of American Chemical Society, 121, 16, 3904-3920, 1999 vorgegangen.

### Herstellung des Alkoxyamins IIa (2,2,5-Trimethyl-3-(1-phenylethoxy)-4-phenyl-3-azahexan):

Es wurde analog der Versuchsvorschrift aus Journal of American Chemical Society, 121, 16, 3904-3920, 1999 vorgegangen.

### Allgemeine Durchführung der Nitroxid-gesteuerten Polymerisationen:

Eine Mischung aus dem Alkoxyamin IIa, dem Nitroxid Ia (5 Mol-% bezogen auf Alkoxyamin IIa), und 2,5 Mol-% Vazo 88™ (2.5 Mol-% bezogen auf Alkoxyamin IIa) werden mit dem Monomeren (85 %ige Lösung in Xylol) gemischt, mehrmals entgast und anschließend unter Argonatmosphäre auf 125 °C erhitzt. Die Reaktionszeit beträgt 24 h. Die Molekulargewichtsbestimmung und die Polydispersität erfolgte via GPC.

### Herstellung der Referenzmuster

### Beispiel 1

Ein für radikalische Polymerisationen konventioneller 2 L-Glasreaktor wurde mit 28 g Acrylsäure, 292 g 2-Ethylhexylacrylat, 40 g Methylacrylat und 300 g Aceton/Isopropanol (93:7) befüllt Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt Nach 1 h Reaktionszeit wurde wiederum 0,2 g AIBN hinzugegeben. Nach 3 und 6 h wurde mit jeweils 150 g Aceton/Isopropanol (93:7) Gemisch verdünnt. Zur Reduktion der Restinitiatoren wurden nach 8 und nach 10 h jeweils 0,4 g Bis-(4-tert.-Butylcyclohexanyl)-Peroxy-dicarbonat (Perkadox 16™, Fa Akzo Nobel) hinzugegeben. Die Reaktion wurde nach 22 h Reaktionszeit abgebrochen und auf Raumtemperatur abgekühlt.
Das mittlere Molekulargewicht und die Polydispersität wurden mittels Test C bestimmt.
Zur Untersuchung der thermischen Alterung wurde die Klebmasse in einem Vakuum-Trockenschrank vom Lösemittel befreit und anschließend nach oben beschriebener Methode im Meßkneter geschert und thermisch belastet
Zur Überprüfung der klebtechnischen Eigenschaften wurde das getrocknete Polyacrylat über einen Walzen-Laborcoater mit 50 g/m² auf einen mit einem Saran-Primer versehenen 23 µm dicken PET-Träger beschichtet und dann mit 40 kGy bei einer Beschleunigungsspannung von 230 KV durch eine ES-Anlage der Fa. Crosslinking bestrahlt und gehärtet. Zur klebtechnischen Beurteilung wurden die Testmethoden A und B durchgeführt.

### Beispiel 2

Es wurde analog Beispiel 1 vorgegangen. Zur Polymerisation wurden 28 g Acrylsäure, 20 g Methylacrylat, 20 g Styrol und 332 g 2-Ethylhexylacrylat eingesetzt. Die Startmonomerkonzentration wurde auf 80 % heraufgesetzt.

### Nitroxid-gesteuerte Polymerisationen

### Beispiel 3

Es wurden 28 g Acrylsäure, 292 g 2-Ethylhexylacrylat, 40 g Methylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt. Zur Aufarbeitung und Weiterverarbeitung wurde analog Beispiel 1 vorgegangen.
Zur Bestimmung des Umsatzes wurde die Polymerisation wiederholt und dann nach Testmethode E vorgegangen.

### Beispiel 3'

Es wurden 28 g Acrylsäure, 292 g 2-Ethylhexylacrylat, 40 g Methylacrylat eingesetzt. Als Initiatoren und Regler wurden 325 mg Alkoxyamin (IIa) und 11 mg Nitroxid (Ia) eingesetzt. Die Monomeren und die Nitroxide werden in Xylol gemischt (85 %-ige Lösung in Xylol), die Lösung wird mehrmals entgast und anschließend unter Argonatmosphäre auf 125 °C erhitzt. Die Reaktionszeit beträgt 24 h. Anschließend wurde der Umsatz nach Testmethode E bestimmt.

### Beispiel 4

Es wurden 28 g Acrylsäure, 20 g Methylacrylat, 20 g Styrol und 332 g 2-Ethylhexylacrylat eingesetzt. Als Initiatoren und Regler wurden 325 mg Alkoxyamin (IIa), 11 mg Nitroxid (la) und 12 mg Vazo 88™ (Fa. DuPont) beigemischt. Die Polymerisation wurde analog der allgemeinen Durchführungsvorschrift für Nitroxid-gesteuerte Polymerisationen durchgeführt. Zur Aufarbeitung und Weiterverarbeitung wurde analog Beispiel 2 vorgegangen.
Zur Bestimmung des Umsatzes wurde die Polymerisation wiederholt und dann nach Testmethode E vorgegangen.

### Beispiel 4'

Es wurden 28 g Acrylsäure, 20 g Methylacrylat, 20 g Styrol und 332 g 2-Ethylhexylaccylat eingesetzt. Als Initiatoren und Regler wurden 325 mg Alkoxyamin (IIa) und 11 mg Nitroxid (Ia) eingesetzt. Die Monomeren und die Nitroxide werden in Xylol gemischt (85 %-ige Lösung in Xylol), die Lösung wird mehrmals entgast und anschließend unter Argonatmosphäre auf 125 °C erhitzt. Die Reaktionszeit beträgt 24 h. Anschließend wurde der Umsatz nach Testmethode E bestimmt.

### Beispiel 5

Es wurden wurden 40 g Acrylsäure und 360 g 2-Ethylhexylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt. Zur Aufarbeitung und Weiterverarbeitung wurde analog Beispiel 3 vorgegangen.

### Beispiel 6

Es wurden 12 g Acrylsäure, 194 g 2-Ethylhexylacrylat und 194 g n-Butylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt. Zur Aufarbeitung und Weiterverarbeitung wurde analog Beispiel 3 vorgegangen.

### Beispiel 7

Es wurden 8 g Acrylsäure, 4 g Methylacrylat, 40 g N-tert.-Butylacrylamid und 348 g 2-Ethylhexylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt. Zur Aufarbeitung und Weiterverarbeitung wurde analog Beispiel 3 vorgegangen.

### Resultate

Der Vergleich der Beispiele 1 und 2 mit 3 und 4 belegt die Vorteile der durch mit Nitroxid gesteuerter Polymerisation hergestellten Polyacrylathaftklebemassen. Die Referenzmuster (Beispiele 1 und 2) wurden konventionell in einer freien radikalischen Polymerisation hergestellt. Zum Vergleich wurden mit der identischen Comonomerzusammensetzung die Polyacrylate in Beispiel 3 und 4 mit der Nitroxid-gesteuerten Polymerisation hergestellt. Die Ergebnisse der Polymerisationen sind in Tabelle 1 dargestellt:

**Tabelle 1**

| Beispiel | M_{w} [g/mol] | Polydispersität PD |
|---|---|---|
| 1 | 489500 | 5.9 |
| 2 | 532000 | 6.3 |
| 3 | 378000 | 2.8 |
| 4 | 393000 | 2.9 |

Die Beispiele 1 und 2 weisen durch die freie radikalische Polymerisation eine hohe Polydispersität auf. Isopropanol als Regler reduziert das mittlere Molekulargewicht, verbreitert aber in der Regel die Molekulargewichtsverteilung. Durch die Nitroxid-gesteuerte Polymerisation werden bedeutend niedrigere Polydispersitäten erzielt. Zudem wird die Verarbeitbarkeit im Hotmelt-Prozess deutlich verbessert. Hierfür wurden die Beispiele 1 bis 4 in einem Hotmeltkneter mehrere Stunden bei 140 °C thermisch belastet und geschert. Anschließend wurde der Gelwert gemessen, um den Einfluß der Schädigung auf das Polymer zu untersuchen. Die Ergebnisse sind in Tabelle 2 dargestellt:

**Tabelle 2**

| Beispiel | Gelwert [%] |
|---|---|
| 1 | 11 |
| 2 | 8 |
| 3 | 0 |
| 4 | 0 |

Beispiele 1 und 2 zeigen nach der Scherbelastung eine deutliche Alterung. Die Masse besitzt einen Gelwert von 8 % (Beispiel 2) bzw. 11 % (Beispiel1). Zum Teil vergelte Polyacrylate lassen sich nicht als Haftklebemassen im Hotmelt-Verfahren noch aus Lösung beschichten. Daher sind solche gealterten Haftklebemassen vollkommen ungeeignet für die praktische Anwendung. Hingegen zeigen die Beispiele 3 und 4 keine Alterungsphänomene, wie z.B. eine Vergelung. Durch die Nitroxid-gesteuerte Polymerisation enthalten die Polymere als Endgruppe Nitroxide, die bei hohen Temperaturen als Radikalfänger in situ wirken können. Durch das Polymerisationsverfahren wird somit direkt ein Alterungsschutzmittel in die Haftklebemasse eingebaut. Die auf diesem Weg hergestellten Polyacrylate lassen sich problemlos im Hotmelt-Verfahren verarbeiten und sind dementsprechend bevorzugt als Haftklebemassen einzusetzen.
Zur Beurteilung der klebtechnischen Eigenschaften werden die Haftklebemassen in Tabelle 3 miteinander verglichen:

**Tabelle 3**

| Beispiel | SSZ (RT, 10 N) | KK-Stahl [N/cm] |
|---|---|---|
| 1 | 2475 | 3.8 |
| 2 | 3490 | 3.7 |
| 3 | +10000 | 3.6 |
| 4 | +10000 | 3.4 |
| SSZ: Scherstandzeiten RT: Raumtemperatur KK: Klebkraft | | |

Die engere Verteilung der Molekulargewichte bewirkt bei der ES-Vemetzung ein effizienteres Netzwerk. Die Scherfestigkeit der Haftklebemassen wird erhöht. Die Beispiele 3 und 4 zeigen bei identischer Comonomerzusammensetzung gegenüber den Beispielen 1 und 2 eine deutlich höhere Scherfestigkeit. Die Beeinflussung im Bereich der Klebkräfte ist vemachlässigbar.
Zur Überprüfung der Effizienz des erfindungsgemäßen Herstellungsverfahrens wurde der Umsatz der Beispiele 3 und 4 bestimmt. Parallel hierzu wurden konventionelle Nitroxid-gesteuerte Polymerisationen durchgeführt, die keine Zusätze an Vazo 88™ (Fa. DuPont) enthielten und somit keine zusätzliche Quelle für Radikale darstellen, die die Polymerisation beschleunigen könnten. Die Ergenisse aus diesen vergleichenden Untersuchungen sind in Tabelle 4 aufgelistet.

**Tabelle 4**

| Beispiel | Umsatz [%] |
|---|---|
| 3 | 95 |
| 4 | 94 |
| 3' | 83 |
| 4' | 78 |

Die Umsatzbestimmungen belegen, daß durch den Vazo 88™-Zusatz die Polymerisationen deutlich gesteigert werden und daß sich nach 24 h Reaktionszeit schon deutlich über 90 % Umsatz realisieren lassen. Die im Vergleich durchgeführten Polymerisationen ohne freien Initiatorzusatz (Beispiele 3' und 4') liegen deutlich unterhalb 90 % und sind somit nicht sehr geeignet zur Herstellung von Acrylathaftklebemassen, da Restmonomere sich - auch im Hotmelt-Aufkonzetrationsprozess - nur sehr schwer entfernen lassen und diese im Haftklebebandprodukt enthaltenen Anteile z.B. Reizungen der Haut verursachen können.

Zur Überprüfung des erfindungsgemäßen Verfahrens zur Herstellung von Acrylathaftklebebändern wurden weitere Acrylathaftklebemassen mit unterschiedlicher Comonomerzusammensetzung mittels Nitroxid-gesteuerter Polymerisation hergestellt. Die Ergebnisse der aus der Schmelze beschichteten Polyacrylate sind in Tabelle 5 dargestellt.

**Tabelle 5**

| Beispiel | SSZ (RT, 10 N) | KK-Stahl [N/cm] |
|---|---|---|
| 5 | +10000 | 4,0 |
| 6 | 6195 | 4,8 |
| 7 | 3680 | 5.0 |
| SSZ: Scherstandzeiten RT: Raumtemperatur KK: Klebkraft | | |

Die Beispiele 5 bis 7 belegen, daß auch noch weitere Comonore verwendet werden können. So lassen sich auch weichere Acrylathaftklebemassen herstellen, die eine höhere Klebkraft z.B. auf Stahl besitzen. Auch die Scherfestigkeit der beschriebenen Acrylatschmelzhaftkleber ist sehr hoch.

## Patentansprüche

1. Initiatorsystem für radikalische Polymerisationen, **dadurch gekennzeichnet, daß** eine Kombination von Verbindungen der allgemeinen Formeln 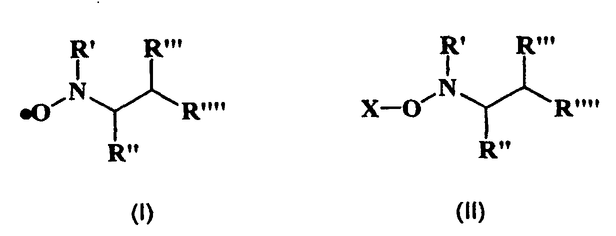 in Anwesenheit radikalisch zerfallender Initiatoren eingesetzt wird, worin
◆ R', R", R''', R"" unabhängig voneinander gewählt sind und
a) verzweigte und unverzweigte C₁- bis C₁₈-Alkylreste; C₃- bis C₁₈-Alkenylreste; C₃- bis C₁₈-Alkinylreste;
b) durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
c) C₂-C₁₈-Hetero-Alkylreste mit mindestens einem O-Atom und/oder einer NR-Gruppe in der Kohlenstoffkette; wobei R gewählt ist aus einer der Gruppen a), b) bzw. d) bis g),
d) mit zumindest einer Estergruppe, Amingruppe, Carbonatgruppe und/oder Epoxidgruppe und/oder mit Schwefel und/oder mit Schwefel-Verbindungen, insbesondere Thioether oder Dithioverbindungen, substituierte C₁-C₁₈-Alkylreste, C₃-C₁₈-Alkenylreste, C₃-C₁₈-Alkinylreste;
e) C₃-C₁₂-Cycloalkylreste
f) C₈-C₁₀-Arylreste
g) Wasserstoff
darstellen;
◆ X eine Gruppe mit mindestens einem Kohlenstoffatom wiedergibt und derart ist, daß das von X abgeleitete freie Radikal X• eine Polymerisation von ethylenisch ungesättigten Monomeren starten kann.

2. Initiatorsystem nach Anspruch 1, **dadurch gekennzeichnet, daß**
als Verbindung (I) die folgende Verbindung (la) und als Verbindung (II) die folgende Verbindung (IIa) eingesetzt werden:

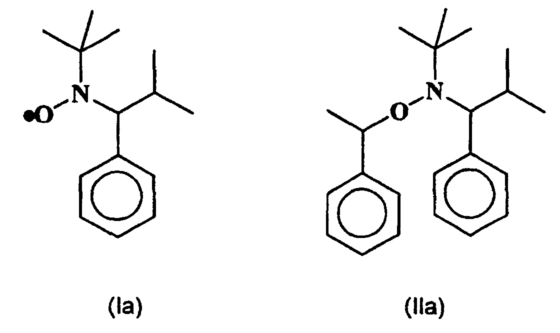

3. Initiatorsystem nach zumindest einem der vorangehenden Ansprüche, **dadurch gekennzeichnet, daß**
als radikalisch zerfallene Initiatoren thermisch zerfallende radikalbildende Azound/oder Peroxo-Initiatoren enthalten sind.

4. Initiatorsystem nach zumindest einem der vorangehenden Ansprüche, **dadurch gekennzeichnet, daß**
die Verbindungen der Formel (I) in einem Verhältnis von 1 Mol-% bis zu 10 Mol-%, insbesondere von 3 Mol-% bis 7 Mol-%, bezogen auf die Verbindungen der Formel (II) vorliegen,
und/oder daß die Azo- und/oder Peroxo-Initiatoren in einem Verhältnis von 1 bis 10 Mol-%, insbesondere von 3 bis 7 Mol-%, bezogen auf die Verbindung der Formel (II) vorliegen.

5. Verfahren zur Herstellung von Acrylathaftklebemassen, **dadurch gekennzeichnet, daß** eine Monomermischung, welche zumindest aus 70 Gew.-% aus ethylenisch ungesättigten Verbindungen besteht, unter Einsatz des Initiatorsystems nach zumindest einem der vorangehenden Ansprüche radikalisch polymerisiert wird.

6. Verfahren zur Herstellung nach Anspruch 5, **dadurch gekennzeichnet, daß**
als ethylenisch ungesättigte Monomere (Meth-)Acrylsäure und/oder deren Derivate, insbesondere Monomere der allgemeinen Formel 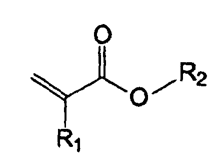 eingesetzt werden, wobei R, = H oder CH₃ und R₂ = H oder eine Alkylkette mit 1 - 20 C-Atomen ist,
und/oder daß als zusätzliche Monomere Vinylverbindungen mit einem Anteil von bis zu 30 Gew.-% eingesetzt werden, insbesondere Vinylester, Vinylhalogenide, Vinylidenhalogenide, Nitrile ethylenisch ungesättigter Kohlenwasserstoffe.

7. Verfahren nach einem der Ansprüche 5 und 6, **dadurch gekennzeichnet, daß**
der Monomermischung oder der Acrylathaftklebemasse Harze oder andere Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

8. Verfahren nach einem der oberen Ansprüche, **dadurch gekennzeichnet, daß**
der zu vemetzenden Polyacrylatmasse Vemetzer zugesetzt sind, insbesondere biund/oder multifunktionelle Acrylate und/oder Methacrylate oder Photoinitiatoren.

9. Verfahren nach einem der vorangehenden Ansprüche, **dadurch gekennzeichnet, daß**
die Haftklebemasse aus der Schmelze heraus weiterverarbeitet wird, insbespndere auf einen Träger aufgetragen wird.

## Claims

1. Initiator system for free-radical polymerizations, **characterized in that** a combination of compounds of the qeneral formulae 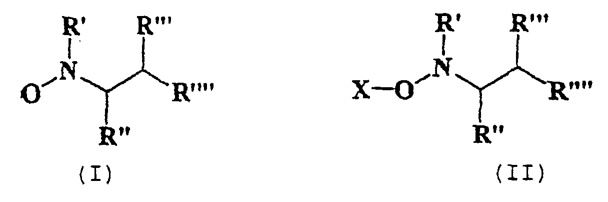 in the presence of free-radically decomposing initiators is used in which
◆ R', R", R"', R"" are chosen independently of one another and are
a) branched and unbranched C₁ to C₁₈ alkyl radicals; C₃ to C₁₈ alkenyl radicals; C₃ to C₁₈ alkynyl radicals;
b) C₃ to C₁₈ alkynyl radicals; C₃ to C₁₈ alkenyl radicals; C₁ to C₁₈ alkyl radicals substituted by at least one OH group or a halogen atom or a silyl ether;
c) C₂-C₁₈ hetero alkyl radicals having at least one oxygen atom and/or an NR group in the carbon chain; R being chosen from one of groups a), b), and d) to g),
d) C₃-C₁₈ alkynyl radicals, C₃-C₁₈ alkenyl radicals, C₁-C₁₈ alkyl radicals substituted by at least one ester group, amine group, carbonate group and/or epoxide group and/or by sulphur and/or by sulphur compounds, especially thioethers or dithio compounds;
e) C₃-C₁₂ cycloalkyl radicals
f) C₆-C₁₀ aryl radicals
g) hydrogen;
◆ X represents a group with at least one carbon atom and is such that the free radical X• derived from X is able to initiate a polymerization of ethylenically unsaturated monomers.

2. Initiator system according to Claim 1, **characterized in that**
as compound (I) the following compound (Ia) and as compound (II) the following compound (IIa) are used:

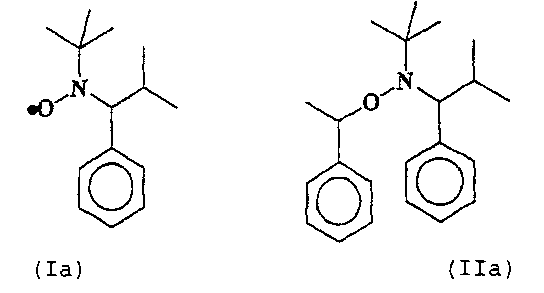

3. Initiator system according to at least one of the preceding claims, **characterized in that** as free-radically decomposing initiators thermally decomposing radical-forming azo and/or peroxo initiators are present.

4. Initiator system according to at least one of the preceding claims, **characterized in that** the compounds of the formula (I) are present in a proportion of from 1 mol% up to 10 mol%, in particular from 3 mol% to 7 mol%, based on the compounds of the formula (II),
and/or **in that** the azo and/or peroxo initiators are present in a proportion of from 1 to 10 mol%, in particular from 3 to 7 mol%, based on the compound of the formula (II).

5. Process for preparing acrylic pressure sensitive adhesives, **characterized in that** a monomer mixture composed of at least 70% by weight of ethylenically unsaturated compounds is subjected to free-radical polymerization using the initiator system according to at least one of the preceding claims.

6. Process for preparing according to Claim 5, **characterized in that** as ethylenically unsaturated monomers (meth)acrylic acid and/or derivatives thereof, especially monomers of the general formula 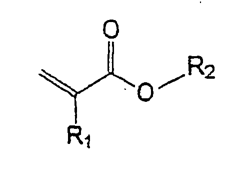 are used where R₁ = H or CH₃ and R₂ = H or is an alkyl chain having 1 - 20 carbon atoms,
and/or **in that** as additional monomers vinyl compounds are used, with a fraction of up to 30% by weight, especially vinyl esters, vinyl halides, vinylidene halides, and nitriles of ethylenically unsaturated hydrocarbons.

7. Process according to one of Claims 5 and 6, **characterized in that** resins or other additives, such as ageing inhibitors, light stabilizers, ozone protectants, fatty acids, plasticizers, nucleators, blowing agents, accelerators and/or fillers are added to the monomer mixture or to the acrylic pressure sensitive adhesive.

8. Process of one of the above claims, **characterized in that** crosslinkers have been added to the polyacrylate composition to be crosslinked, especially difunctional and/or polyfunctional acrylates and/or methacrylates or photoinitiators.

9. Process of one of the preceding claims, **characterized in that** the pressure sensitive adhesive is processed further from the melt, in particular being applied to a backing.

## Revendications

1. Système d'initiateur pour des polymérisations radicalaires, **caractérisé en ce qu'**on utilise une combinaison de composés de formules générales 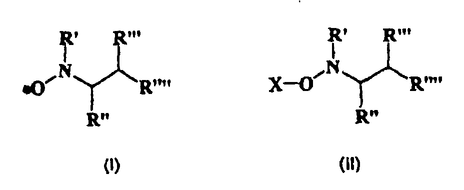 en présence d'initiateurs qui se décomposent en radicaux, dans lesquelles
R', R", R"', R"" sont choisis indépendamment l'un de l'autre et représentent
a) des radicaux alkyle en C₁ à C₁₈ ; des radicaux alcényle en C₃ à C₁₈ ; des radicaux alcynyle en C₃ à C₁₈ ; ramifiés et non ramifiés ;
b) des radicaux alkyle en C₁ à C₁₈ ; des radicaux alcényle en C₃ à C₁₈ ; des radicaux alcynyle en C₃ à C₁₈ ; substitués par au moins un groupe OH ou un atome d'halogène ou un silyléther ;
c) des radicaux hétéroalkyle en C₂ à C₁₈ avec au moins un atome O et/ou un groupe NR dans la chaîne carbonée, R étant choisi parmi un des groupes a), b) ou d) à g) ;
d) des radicaux alkyle en C₁ à C₁₈, des radicaux alcényle en C₃ à C₁₈ , des radicaux alcynyle en C₃ à C₁₈ substitués par au moins un groupe ester, un groupe amino, un groupe carbonate et/ou un groupe époxyde et/ou un soufre et/ou des composés du soufre, en particulier un groupe thioéther ;
e) des radicaux cycloalkyle en C₃ à C₁₂ ;
f) des radicaux aryle en C₆ à C₁₀ ;
g) hydrogène ;
X représente un groupe comprenant au moins un atome de carbone et est tel que le radical libre X• dérivé de X peut démarrer une polymérisation de monomères éthyléniquement insaturés.

2. Système d'initiateur selon la revendication 1, **caractérisé en ce qu'**on utilise comme composé (I) le composé (Ia) suivant et comme composé (II) le composé (IIa) suivant :

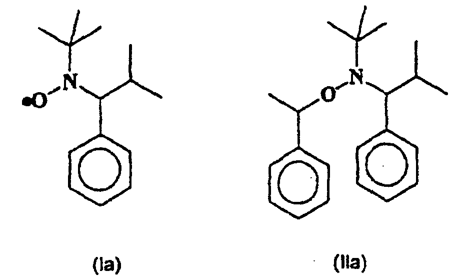

3. Système d'initiateur selon au moins l'une quelconque des revendications précédentes, **caractérisé en ce que** des initiateurs peroxo et/ou azo se décomposant par voie thermique, formant des radicaux, sont contenus comme initiateurs se décomposant en radicaux.

4. Système d'initiateur selon au moins l'une quelconque des revendications précédentes, **caractérisé en ce que** les composés de formule (I) se trouvent dans un rapport de 1% en mole à 10% en mole, en particulier de 3% en mole à 7% en mole par rapport aux composés de formule (II)
et/ou que les initiateurs azo et/ou peroxo se trouvent dans un rapport de 1 à 10% en mole, en particulier de 3 à 7% en mole, par rapport au composé de formule (II).

5. Procédé pour la préparation de masses auto-adhésives d'acrylate, **caractérisé en ce qu'**on polymérise par voie radicalaire un mélange de monomères, constitué par au moins 70% en poids de composés éthyléniquement insaturés, avec utilisation du système d'initiateur selon au moins l'une quelconque des revendications précédentes.

6. Procédé pour la préparation selon la revendication 5, **caractérisé en ce qu'**on utilise comme monomères éthyléniquement insaturés l'acide (méth)acrylique et/ou ses dérivés, en particulier des monomères de formule générale 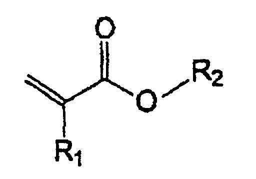 dans laquelle R₁ = H ou CH₃ et R₂ = H ou une chaîne alkyle comprenant 1 à 20 atomes de carbone
et/ou on utilise comme monomères supplémentaires des composés de vinyle en une proportion allant jusqu'à 30% en poids, en particulier les esters de vinyle, les halogénures de vinyle, les halogénures de vinylidène, les nitriles d'hydrocarbures éthyléniquement insaturés.

7. Procédé selon l'une quelconque des revendications 5 et 6, **caractérisé en ce que** le mélange de monomères ou la masse auto-adhésive d'acrylate contient des résines ou d'autres additifs, tels que les agents de protection contre le vieillissement, la lumière, l'ozone, les acides gras, les plastifiants, les agents de formation de germe, les agents gonflants, les accélérateurs et/ou les charges.

8. Procédé selon l'une quelconque des revendications ci-dessus, **caractérisé en ce que** des réticulants sont ajoutés à la masse de polyacrylate à réticuler, en particulier des acrylates difonctionnels et/ou multifonctionnels et/ou des méthacrylates difonctionnels et/ou multifonctionnels ou des photoinitiateurs.

9. Procédé selon l'une quelconque des revendications précédentes, **caractérisé en ce que** la masse auto-adhésive est transformée ultérieurement à partir de la masse fondue, elle est en particulier appliquée sur un support.
